(19)

**Europäisches Patentamt**
**European Patent Office**
**Office européen des brevets**

(11) **EP 4 668 734 A1**

(12) **EUROPEAN PATENT APPLICATION**

(43) Date of publication:
**24.12.2025 Bulletin 2025/52**

(21) Application number: **25170176.9**

(22) Date of filing: **11.04.2025**

(51) International Patent Classification (IPC):
**H04N 19/102** (2014.01)     **H04N 19/154** (2014.01)
**H04N 19/179** (2014.01)     **H04N 19/192** (2014.01)
**H04N 19/61** (2014.01)     **H04N 19/149** (2014.01)

(52) Cooperative Patent Classification (CPC):
**H04N 19/154; H04N 19/102; H04N 19/149;**
**H04N 19/179; H04N 19/192; H04N 19/61**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **17.06.2024   US 202463660819 P**
**16.09.2024   US 202418887006**

(71) Applicants:
• **Disney Enterprises, Inc.**
  **Burbank, CA 91521 (US)**
• **Beijing YoJaJa Software**
  **Technology Development Co., Ltd.**
  **Beijing 100015 (CN)**

(72) Inventors:
• **De Albuquerque Azevedo, Roberto Gerson**
  **Burbank (US)**
• **Xue, Yuanyi**
  **Burbank (US)**
• **Labrozzi, Scott**
  **Burbank (US)**
• **Schroers, Christopher Richard**
  **Burbank (US)**
• **Zhang, Yang**
  **Burbank (US)**
• **Zhang, Wenhao**
  **Beijing (CN)**

(74) Representative: **Müller-Boré & Partner**
**Patentanwälte PartG mbB**
**Friedenheimer Brücke 21**
**80639 München (DE)**

(54) **VIDEO ENCODER AUTOTUNING OF PARAMETERS**

(57)     In some embodiments, a method determines an instance of content and a metric to evaluate a quality of an encoding of the instance of content. A set of features is extracted. The method performs an optimized search process to evaluate different combinations of encoding parameter values that are used to encode the content to generate instances of encoded content. The instances of encoded content are compared to the metric to determine a next combination of encoding parameter values to use.

An optimal combination of encoding parameter values is selected that is associated with one of the instances of encoded content. Predicted encoding parameter values are output from a model using model parameters based on an input of the set of features. The method is trained using the optimal combination of encoding parameter values and the predicted encoding parameter values, wherein the model parameters are adjusted in the training.

FIG. 1

EP 4 668 734 A1

**Description**

## CROSS REFERENCE TO RELATED APPLICATIONS

Pursuant to 35 U.S.C. §119(e), this application is entitled to and claims the benefit of the filing date of U.S. Provisional App. No. 63/660,819 filed June 17, 2024, entitled "VIDEO ENCODER AUTOTUNING OF PARAMETERS", the content of which is incorporated herein by reference in its entirety for all purposes.

## BACKGROUND

Video encoders have many parameters that can be tuned to specific scenarios (e.g., on-demand vs. live video) or in a per-instance of content/scene manner. Examples of encoding parameters include a number of reference frames, adaptive quantization mode and strength, a number of b frames, and motion estimation range. Finding the optimal encoding parameters, however, is non-trivial and resource intensive.

## BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.

FIG. 1 depicts a simplified system for training a model according to some embodiments.

FIG. 2 depicts a simplified system for encoding content according to some embodiments.

FIG. 3 depicts a simplified flowchart of the search optimization process according to some embodiments.

FIG. 4 depicts a simplified flowchart for training a model according to some embodiments.

FIG. 5 depicts a simplified flowchart for predicting encoding parameters according to some embodiments.

FIG. 6 illustrates one example of a computing device according to some embodiments.

## DETAILED DESCRIPTION

Described herein are techniques for a video encoding system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### System Overview

A system provides an efficient machine learning-based approach for video encoder autotuning, e.g., for the automatic selection of video encoder parameters in a per-content or portion of content manner. The content may be an instance of content, such as a video, title, movie, show, episode, short, scene, shot, portion of content, etc. Video encoders are complex software systems containing encoding parameters (e.g., dozens or more encoding parameters), which allows them to be configured to different scenarios, requirements, or specific instances (e.g., videos or scenes). The encoding parameters may be set to different values to generate different encodings of the content. Besides the number of encoding parameters, the inter-dependency between them adds to the complexity of finding an optimized combination of encoding parameters. Even though good practices in the industry have emerged, with the definition of presets per content type (e.g., film vs. cartoon), such practices are still not enough for specific instances of content or portions of content, resulting in suboptimal results. Indeed, finding the best encoding parameters for an instance of content is currently a mix of best practices and trial and error artwork.

In an improvement, an efficient video encoder autotuning system is based on machine learning and offline search optimization, such as a Bayesian optimization. In some embodiments, the system uses Bayesian optimization to find a per-content (e.g., title or portion thereof) optimal encoding parameters, in an offline manner to generate a dataset. For example, the optimal encoding parameters are found for a first movie. Then, the system analyzes a second movie to find optimal encoding parameters for it. Once finding the respective optimal encoding parameters, the system uses the dataset to then train a machine learning model that is able to map features extracted from the content to the respective optimal encoding parameters. The trained model is then used in an inference stage to predict optimal encoding parameters for content, such as movies, shows, etc., which can include content other than that used in the training process. The content can then be encoded with the predicted optimal encoding parameters. This improves the encoding of content as the predicted optimal encoding parameters may produce an optimal encoding for that instance of content. Also, the process efficiently uses computing resources to train the model and then predict the optimal encoding parameters.

A naive approach is to brute-force all the combination of values for different encoding parameters, encode the content with such combinations, and then choose the combination of encoding parameters with best quality (accordingly to a specific metric). The high number of available encoding parameters and the exponential combination of values for the available encoding parameters, however, makes such an approach resource intensive and impractical. Another method may use optimization methods (e.g., genetic algorithms or Bayesian optimization) to guide the search to determine the best encoding of the video for each individual instance of content. In this case, the content is encoded with combinations of encoding parameters, and the optimal encoding of the instance of content is selected (per a metric). However, even though such approaches can provide an approximation of the optimal encoding parameter values per content instance, they are still resource intensive, since they still require the content to be encoded hundreds of times for each title. That is, when a new instance of content is to be encoded, the new instance is encoded using the same search process for the optimal encoding of the content. This process uses a large amount of computing resources, and when a company has a large number of instances of content to encode, the resources may not be available.

In some embodiments, the system uses a data-driven method that can support a much faster decision, requiring only one pass feature extraction, to predict the encoding parameters for an instance of content. Then, the content can be encoded once using the encoding parameters. The system is based on 1) generating an off-line dataset through optimization methods (e.g., Bayesian optimization, genetics algorithms, or other processes) and then 2) using the data to learn a model that predicts the optimal encoding parameters. The model is able to learn the optimal encoding parameters found from the dataset, and by using the trained model, can extrapolate the prediction of encoding parameters to new instance of content. This process more efficiently uses computing resources as only one encoding of the new instance of content may be required using the prediction of optimal encoding parameters. Other advantages of the process is that it is: 1) noninvasive, since it does not need any change on the encoder itself; and 2) general enough so that it can be easily adapted to different encoders, encoding parameter sets, and target quality metrics.

## System

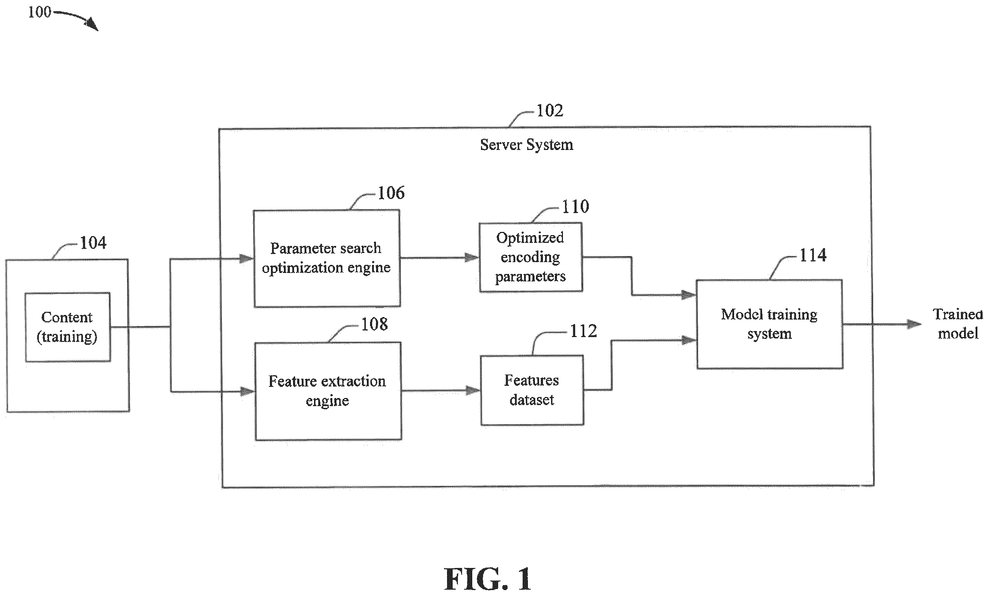

FIG. 1 depicts a simplified system 100 for training a model according to some embodiments. System 100 includes a server system 102 that receives content stored in a database 104. The content is used for training the model. After training, server system 102 outputs a trained model. Server system 102 may include one or more computing devices that perform the training.

The content may be instances of content that are used in the training process. Examples of content include videos, audio, etc. The instances of content may be different types of content, such as movies, shows, shorts, portions of videos (e.g., scenes), or other titles. When the term "content" is used, this may be an instance of content, such as a video file. Also, when instance of content is used, this may be portions of content, such as a scene of a movie. That is, different scenes in a movie can have different optimal encoding parameters.

Server system 102 includes a parameter search optimization engine 106 and a feature extraction engine 108. Parameter search optimization engine 106 (hereinafter optimization engine 106) may perform a search for optimal encoding parameters for respective instances of content. Optimization engine 106 uses an optimization based approach to generate an off-line dataset of optimal encoding parameters that are then used to train the model in a supervised way to approximate the optimal performance of the encoder based on the offline dataset. For each instance of content in the dataset, optimization engine 106 performs an optimization based search approach to guide a search for the "optimal" encoding parameters for that sample. When "optimal" is referenced, it may be the highest ranked determined encoding parameters when measured based on a metric.

Optimization engine 106 may perform and optimize a search in an iterative process by using the accumulated knowledge in a known area of the search space to guide sampling in the remaining area. In some embodiments, optimization engine 106 may use an optimization process, such as a Bayesian optimization, genetics algorithm, or other optimization process. Although Bayesian optimization is a good fit for the process, and can work with an encoder as a black-box function- the process is not restricted to using Bayesian optimization. Indeed, any other optimization search that could be used to generate the optimal encoding parameters is compatible with the training process. The optimization process will be described in more detail below.

Feature extraction engine 108 may extract feature values of the respective instances of content. The feature values can characterize the respective content, and can later be used to optimize model parameters to predict the ground truth optimal encoding parameters found by the search optimization approach. The features that are used may be preset, but can be dynamically selected based on the respective content. In some embodiments, the following features may be extracted from the dataset:

- Spatial Information and Temporal Information (SITI).

- Energy-based Video Complexity Features.

- First pass features from an encoder with fast encoding.

Spatial information may be computed as the root mean square (RMS) difference between the Sobel maps of each of the frames Temporal information may be defined based on the motion between adjacent frames, e.g., the difference between the pixel values (of the luminance plane) at the same location in adjacent frames. For the energy-based features, the average texture energy and the average gradient of the texture energy per frame may be used. The first pass features may be information from the fast encoding of the content.

These features aim at characterizing the content, but other features may be used. The features can be used as input by the model to predict the optimal encoding parameters for a specific content. Moreover, although these features may be one feature set, the method is also feature agnostic and can be extended to other features, e.g., deep-learning-based features. In some embodiments, the above features may be computed per frame and then statistics on those features, e.g., mean, standard deviation, minimum, and maximum may be computed per instance of content. Either per frame, per instance, or other feature values may be used.

For each prospective instance of content, optimal encoding parameters are stored in storage at 110 and a features dataset stores extracted feature values in storage at 112 for respective instances of content.

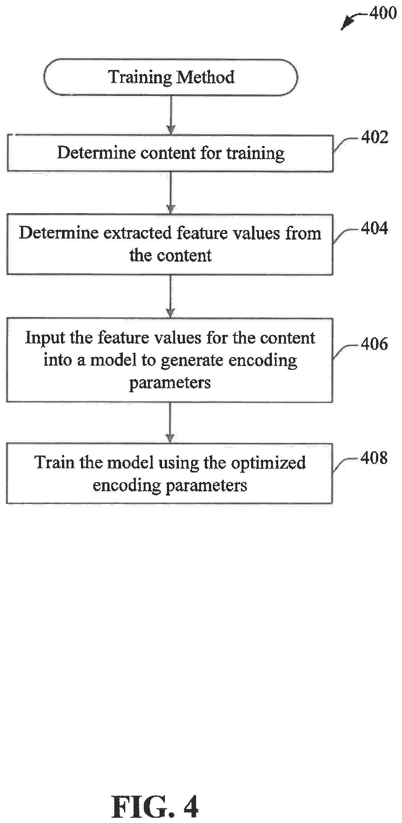

A model training system 114 receives the optimal encoding parameters and extracted features for instances of content. Then, model training system 114 uses the extracted features and optimal encoding parameters to train a model. For example, the extracted features may be input into the model, and the model outputs predicted encoding parameters. The optimal encoding parameters may be compared to the predicted encoding parameters, and model training system 114 optimizes the respective model parameters of the model based on the comparison. The model parameters are parameters of the model that are used to predict the optimal encoding parameters, such as weights. In contrast, the encoding parameters are the parameter values that are used by the encoder when encoding the content. Different encoding parameters may result in encoded content with different quality as measured by a metric while different model parameters may result in different optimal encoding parameters that are predicted. The training of the model will be described in more detail in FIG. 4.

Content Encoding

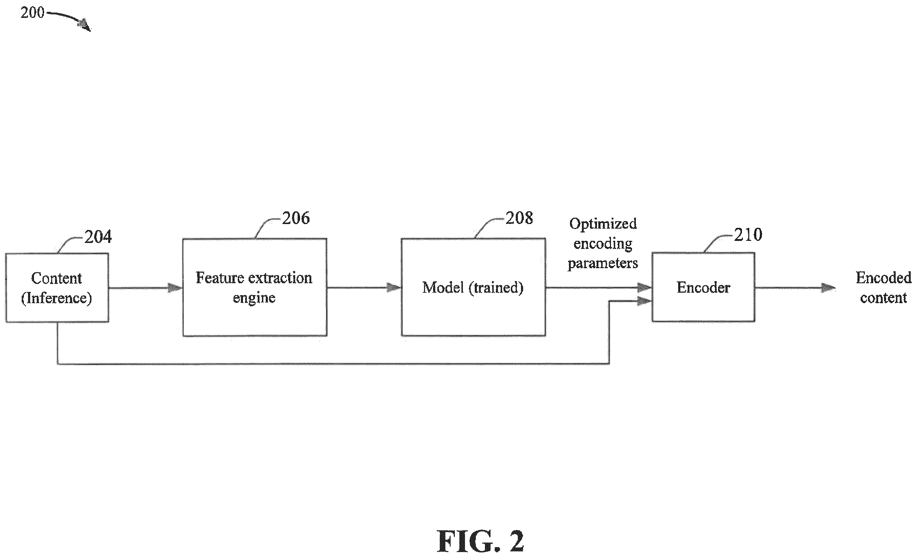

Once the model is trained, the trained model may be used to encode content. FIG. 2 depicts a simplified system 200 for encoding content according to some embodiments. After training the model, content may be analyzed in an inference stage. In this stage, the content may be different from the content that was used in the training stage. Here, the model is used to generate the optimal encoding parameters for the content. In some embodiments, to determine the optimal encoding parameters for instances of content, the instances of content do not need to be encoded with different combinations of encoding parameters. Rather, the trained model is used to predict the optimal encoding parameters.

The content may be stored in storage at 204 and is received at feature extraction engine 206. This content is used in the inference stage to predict optimal encoding parameters for content. Feature extraction engine 206 extracts feature values for the instance of content,. The features that are used are the same as the features that were extracted in the training process, but could use different features, such as some extra features or less features.

A model 208 that has been trained receives the feature values as input, and predicts optimal encoding parameters. For example, using the model parameters of the model that were trained, model 208 maps the feature values to optimal encoding parameters. In some embodiments, this prediction process may be run once to determine the optimal encoding parameters.

An encoder 210 receives the optimal encoding parameters and the instance of content, and encodes the content into an encoding of the content. For example, the optimal encoding parameters that were predicted for this instance of content are used by the encoder to encode the content.

In the above example, the instance of content was not encoded multiple times to determine the optimal encoding parameters or encoding multiple times to determine the optimal encoded content. Rather, model 208 is used to determine the optimal encoding parameters based on feature values extracted from the instance of content. The optimal encoding parameters may be determined without encoding the content. This improves the use of computing resources because the instance of content can be encoded once using optimal encoding parameters that are determined by model 208.

The following will now describe the search optimization process, the training process, and the prediction process in more detail.

Search Optimization

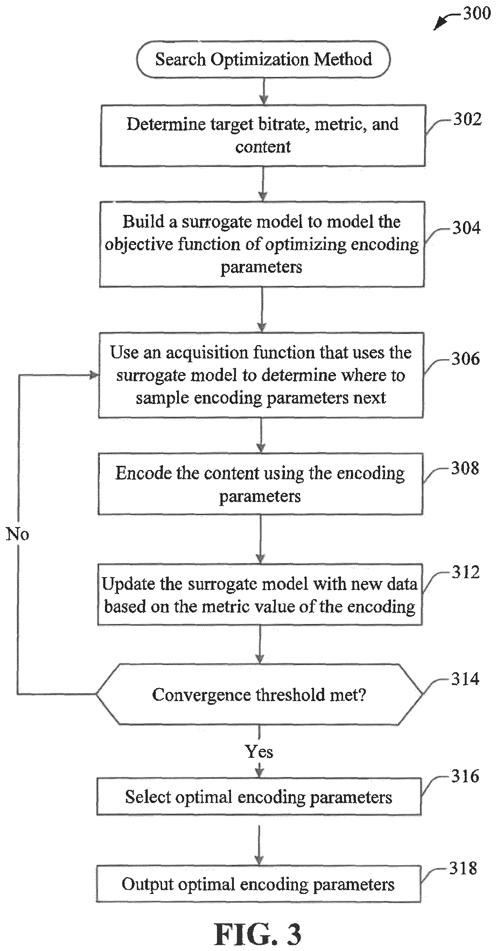

FIG. 3 depicts a simplified flowchart 300 of the search optimization process according to some embodiments. Optimization engine 106 considers the encoder as function E that takes as input the frames of a video V = {F1,F2,...,Fn} the specific encoding parameters p = {p1,p2,...,pp} and the target bitrate b, and outputs a set of encoded frames V',

$$\mathcal{V}' = \{F_1', F_2', ... F_n'\}$$, e.g.,

$$V' = E(V,p,b) \qquad\qquad (Eq.\ 1)$$

Given the set of encoding parameters, p, the encoder tries its best using the encoding parameters to encode the video frames V into the encoded frames V' while keeping the final bitrate as close as possible to bitrate b. The final achieved quality and bitrate depends on the encoder process based on p.

Given a quality metric M(V,V'), finding the optimal encoding parameters can then be defined as

$$\max \quad M(V,V'),\ p1,p2,...\in P1,P2,... \qquad\qquad (Eq.\ 2)$$

where V' is given by Eq. 1 and parameters p1, p2, etc. are a best combination of parameters P1, P2, etc. that maximizes quality as defined by a quality metric. Common examples of a quality metric M are PSNR (Peak-signal-to-noise ratio) and Video Multimethod Assessment Fusion (VMAF), but other quality metrics may be used. The goal is to find the best combination of encoding parameter values p in the set of P, $p \in P$, that maximizes output quality produced by the encoder.

As a straightforward solution, the above can be modeled as an optimization problem and solved by different techniques, e.g., genetic algorithms or Bayesian optimization. Such approaches require hundreds of function evaluations (e.g., encoding the content) to converge to the optimal solution. However, since the evaluation of the encoder function (e.g., encoding the content) is a very expensive process in time and computing resources, running such an approach per-instance of content or portion during the inference stage is prohibitive in practice.

To improve the process, at 302, optimization engine 106 determines a target bitrate, metric, and content. There may be multiple target bitrates in the training dataset, such as one megabits per second (Mbps), 2 Mbps, 3 Mbps, 4 Mbps, 5 Mbps, etc. The following process may be performed for each target bitrate. For example, a variable may be added as a condition into the feature set for the target bitrate, and the model is trained based on the value of the target bitrate. A metric may be defined that is used to analyze the quality and is optimized during the training. Some examples of the metric of peak signal-to-noise ratio (PSNR) and Video Multimethod Assessment Function (VMAF), but other quality metrics may be used.

The following describes a search optimization using a Bayesian optimization process. However, other processes may be used as described above. The Bayesian optimization process is an approach to optimizing objective functions that take a long time to evaluate. It uses the accumulated knowledge in the known area of the search space to guide sampling in the remaining area in an iterative process. At 304, optimization engine 106 builds a surrogate model to model the objective function of optimizing encoding parameters. The surrogate model may be constructed using a Gaussian process or other probabilistic models. The Gaussian process models the objective function of the encoder and quantifies the uncertainty in the surrogate.

At 306, optimization engine 106 uses an acquisition function that uses the surrogate model to determine where to sample encoding parameters next. The surrogate model provides a posterior distribution over the objective function values. The acquisition function determines encoding parameters to use next in the training process. The acquisition function can reach the optimal encoding parameters faster using the iterative process by searching the parameter space more efficiently than in a naive approach that searches all possible combinations.

At 308, optimization engine 106 encodes the content using the encoding parameters. For example, the encoder encodes the content using the encoding parameters that were determined. This produces an encoded video, which can be analyzed to measure the metric to determine an associated metric value that quantifies the quality of the encoding.

At 312, optimization engine 106 updates the surrogate model with new data based on the metric value of the encoding. For example, a new data point is added to the surrogate model using the value of the metric and the encoding parameters that were used.

At 314, optimization engine 106 determines if a convergence threshold has been met. For example, the threshold may be based on different criteria, such as a number of evaluations of encodings, or a threshold of quality is met. For example, a maximum of 200 encodings may be performed. Also, a quality level threshold may also be used, such as an encoding may meet a quality metric value. If the convergence threshold is not met, the process reiterates to 306 to determine where to sample encoding parameters next. The updated surrogate model is used by the acquisition function to determine the next encoding parameters to use.

If the convergence threshold is met, at 316, optimization engine 106 selects the optimal encoding parameters. For the Bayesian optimization, there may be a default preset $p_{default}$ that is used to improve upon and only consider instances of content that have a better quality than the default preset. For example, the optimal encoding parameters may be the encoding parameters that resulted in the highest ranked or best metric value found in the encodings that were performed. Other methods for selecting the optimal encoding parameters may also be used, such as an average of the encoding parameters of a portion of the highest ranked encodings.

At 318, optimization engine 106 outputs the optimal encoding parameters. In conclusion, for each target bitrate in the dataset (1Mbps, 2Mbps, 3Mbps, 4Mbps, and 5Mbps), each instance of content goes through the above Bayesian optimization approach, being encoded a maximum number of times, such as N=200 times. Finally, for each instance of content and target bitrate, optimization engine 106 selects the optimal metric value found from these encodings to determine the optimal encoding parameters that can be used as the ground truth for the content. Optimization engine 106 generates a different dataset for each of the metrics being optimized for, such as VMAF and PNSR.

Algorithm 1 details the Bayesian optimization approach:

Place a Gaussian process prior on $f$

Observe $f$ at $n_0$ points. Set $n = n_0$.

while $n \leq N$ do

      Update the posterior probability distribution on $f$ using the available data

      Let $x_n$ be a maximizer of the acquisition function over $x$, where the acquisition function is computed using the current posterior distribution.

      Observe $y_n = f(x_n)$.

      Increment $n$

end while

Return the point evaluated with the largest $f(x)$.

f(x) may be the encoder function and n is a combination of encoding parameters.

Although the above optimization is described, other optimizations may also be used, such as genetic algorithms.

Training

FIG. 4 depicts a simplified flowchart 400 for training model 208 according to some embodiments. At 402, model training system 114 determines content for training. For example, model training system 114 selects the instances of content in which the optimal encoding parameters are determined. At 404, model training system 114 determines extracted feature values from the content. The extracted feature values may be from feature extraction engine 108 and characterize the content.

At 406, model training system 114 inputs the feature values for the content into model 208 to predict encoding parameters. In this case, the model generates the encoding parameters, and the content is not encoded. This is an improvement in resource use because the content does not need to be encoded.

At 408, model training system 114 trains model 208 using the optimal encoding parameters for the content. Different methods may be used to train model 208 in a supervised manner to optimize model parameters to predict the optimal encoding parameters. In some embodiments, classification or regression may be used. The classification approach may use a number of combinations in which the model is trained to classify input. This process may limit the approach to a predefined number of combinations of encoding parameter values. Model 208 may also be trained to dynamically select encoding parameter values using a regression approach. The regression may use a function that minimizes the error between the predicted encoding parameters and the optimal encoding parameters.

Prediction

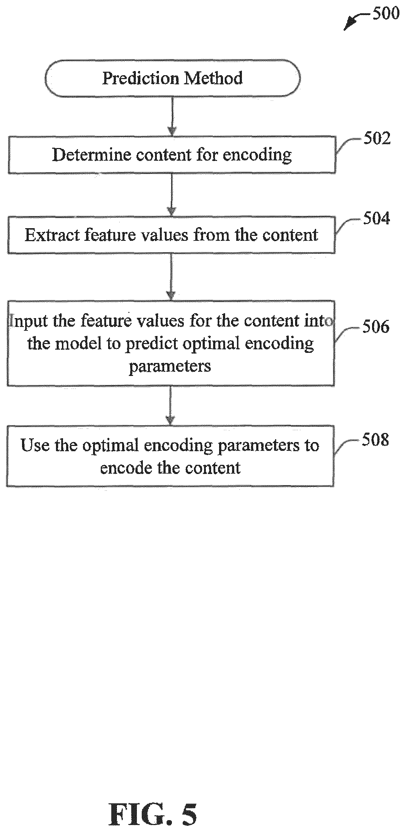

Once model 208 is trained, model 208 may be used to predict the optimal encoding parameters for any content. For example, the system may extract feature values from an instance of content, input the feature values into model 208, and model 208 outputs the predicted optimal encoding parameters for the instance of content. FIG. 5 depicts a simplified flowchart 500 for predicting encoding parameters according to some embodiments. At 502, content is determined for encoding. The content that is determined may or may not have been used in the training process. For example, model 208 may be used on new instances of content that were not used in the training process. The new instances of content may have different feature values than the instances of content used in the training process. However, no encoding of the content is required to predict the optimal encoding parameters. This is an improvement over a naive search that requires encoding of any new instance of content multiple times to find the encoding that results in the optimized coding parameters. At 504, feature values are extracted from the content. The features that were used during the training may be used here.
At 506, the feature values for the content are input into model 208 to predict optimal encoding parameters. In this case, the content has not been encoded yet. As discussed above, the model has been trained to correlate feature values to optimal encoding parameters. Based on the parameters of the model, encoding parameters are output based on the features values.
At 508, encoder 210 uses the optimal encoding parameters to encode the content. Accordingly, the encoded content may be efficiently encoded based on the predicted optimal encoding parameters. Also, the encoding process efficiently uses computing resources as the optimal encoding parameters are determined without having to encode the content multiple times or at all.
Accordingly, the process improves the encoding process by optimally determining a training dataset of optimal encoding parameters. Then, the model may be trained using the optimal encoding parameters. This results in a trained model that can be used to predict optimal encoding parameters for other instances of content.

System

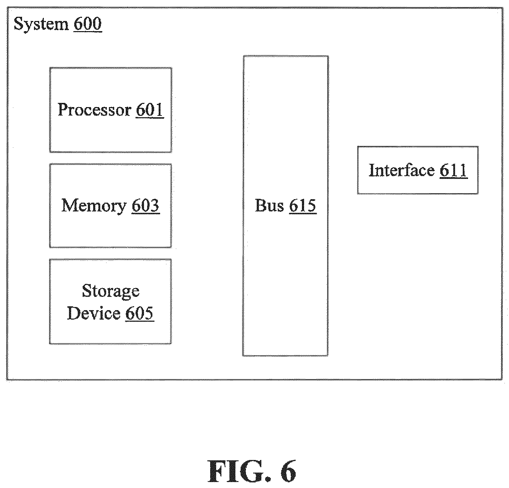

FIG. 6 illustrates one example of a computing device according to some embodiments. According to various embodiments, a system 600 suitable for implementing embodiments described herein includes a processor 601, a memory 603, a storage device 605, an interface 611, and a bus 615 (e.g., a PCI bus or other interconnection fabric.) System 600 may operate as a variety of devices or any other device or service described herein. Although a particular configuration is described, a variety of alternative configurations are possible. The processor 601 may perform operations such as those described herein. Instructions for performing such operations may be embodied in the memory 603, on one or more non-transitory computer readable media, or on some other storage device. Various specially configured devices can also be used in place of or in addition to the processor 601. Memory 603 may be random access memory (RAM) or other dynamic storage devices. Storage device 605 may include a non-transitory computer-readable storage medium holding information, instructions, or some combination thereof, for example instructions that when executed by the processor 601, cause processor 601 to be configured or operable to perform one or more operations of a method as described herein. Bus 615 or other communication components may support communication of information within system 600. The interface 611 may be connected to bus 615 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.
Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magnetooptical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:

   determining an instance of content and a metric to evaluate a quality of an encoding of the instance of content;
   extracting a set of features for the instance of content;
   performing an optimized search process to evaluate different combinations of encoding parameter values that are used to encode the content to generate instances of encoded content, wherein the instances of encoded content are compared to the metric to determine a next combination of encoding parameter values to use;
   selecting an optimal combination of encoding parameter values that is associated with one of the instances of encoded content, wherein the one of the instances of encoded content is selected based a comparison to the metric;
   outputting predicted encoding parameter values from a model using model parameters based on an input of the set of features; and
   training the model using the optimal combination of encoding parameter values and the predicted encoding parameter values, wherein the model parameters are adjusted in the training.

2. The method of claim 1, wherein performing the optimized search process comprises:

   iteratively determining combinations of encoding parameter values based on prior sampling of combinations of encoding parameter values and respective comparisons of instances of encoded content to the metric,
   wherein, optionally, prior sampling of combinations of encoding parameter values is used to focus a search for another combination of encoding parameter values.

3. The method of claim 1 or 2, wherein performing the optimized search process comprises:

   building a surrogate model to model an encoder function to encode the instance of content;
   using an acquisition function to determine where to sample encoding parameter values next based on the surrogate model;
   encoding the instance of content based on the encoding parameter values to generate an instance of encoded content; and
   updating the surrogate model based on comparing the instance of encoded content to the metric.

4. The method of any one of claims 1 to 3, wherein selecting the optimal combination of encoding parameter values comprises:

determining the instance of encoded content that is associated with a highest ranked value of the metric; and selecting the combination of encoding parameters that were used to generate the instance of encoded content that is associated with the highest ranked value of the metric.

5. The method of any one of claims 1 to 4, wherein training the model comprises:

inputting the set of features into the model;
outputting predicted encoding parameter values; and
comparing the predicted encoding parameter values to the optimal combination of encoding parameter values to adjust the model parameters of the model based on a difference between the predicted encoding parameter values and the optimal combination of encoding parameter values,
wherein, optionally:
the model parameters are trained using a regression training process or classification training process.

6. The method of any one of claims 1 to 5, further comprising:

using the model to determine predicted encoding parameter values for a new instance of content, wherein the predicted encoding parameter values are used by an encoder to encode the new instance of content,
wherein using the model optionally comprises:

extracting feature values of the new instance of content;
inputting the feature values into the model; and
outputting the predicted encoding parameters for the new instance of content based on the model parameters that were adjusted.

7. The method of claim 6, wherein the predicted encoding parameters for the new instance of content are determined without encoding the new instance of content; and/or
wherein the predicted encoding parameters for the new instance of content are used by the encoder to encode the new instance of content a single time for a target bitrate.

8. The method of claim 6 or 7, further comprising:
encoding the new instance of content using the predicted encoding parameter values.

9. The method of any one of claims 1 to 8, wherein training the model comprises:
training the model using a condition that sets a bitrate in a plurality of bitrates, wherein the model is trained to output predicted encoding parameter values for bitrates in the plurality of bitrates.

10. A non-transitory computer-readable storage medium having stored thereon computer executable instructions, which when executed by a computing device, cause the computing device to be operable for:

determining an instance of content and a metric to evaluate a quality of an encoding of the instance of content;
extracting a set of features for the instance of content;
performing an optimized search process to evaluate different combinations of encoding parameter values that are used to encode the content to generate instances of encoded content, wherein the instances of encoded content are compared to the metric to determine a next combination of encoding parameter values to use;
selecting an optimal combination of encoding parameter values that is associated with one of the instances of encoded content, wherein the one of the instances of encoded content is selected based a comparison to the metric;
outputting predicted encoding parameter values from a model using model parameters based on an input of the set of features; and
training the model using the optimal combination of encoding parameter values and the predicted encoding parameter values, wherein the model parameters are adjusted in the training.

11. A method comprising:

receiving a trained model, wherein the model was trained using an optimized search process that evaluated different combinations of encoding parameter values that are used to encode an instance of content to generate instances of encoded content, wherein the instances of encoded content are compared to a metric to determine a next combination of encoding parameter values to use to determine an optimal combination of encoding parameter values for the instance of content;

extracting feature values of a new instance of content;

inputting the feature values into the trained model to generate predicted encoding parameters; and

encoding the new instance of content using the predicted encoding parameter values.

12. The method of claim 11, wherein the predicted encoding parameters are determined without encoding the new instance of content; and/or

wherein the predicted encoding parameters for the new instance of content are used by the encoder to encode the new instance of content a single time for a target bitrate.

13. The method of claim 11 or 12, further comprising:

inputting a condition that sets a bitrate in a plurality of bitrates, wherein the trained model outputs the predicted encoding parameter values for the bitrate in the plurality of bitrates.

14. The method of claim 13, further comprising:

determining an instance of content in the instances of content and the metric to evaluate a quality of an encoding of the instance of content;

extracting a set of features for the instances of content;

performing the optimized search process;

selecting the optimal combination of encoding parameter values that is associated with one of the instances of encoded content, wherein the one of the instances of encoded content is selected based a comparison to the metric;

outputting predicted encoding parameter values from the model using model parameters based on an input of the set of features; and

training the model using the optimal combination of encoding parameter values and the predicted encoding parameter values, wherein the model parameters are adjusted in the training.

15. The method of claim 14, wherein performing the optimized search process comprises:

building a surrogate model to model an encoder function to encode the instance of content;

using an acquisition function to determine where to sample encoding parameter values next based on the surrogate model;

encoding the instance of content based on the encoding parameter values to generate an instance of encoded content; and

updating the surrogate model based on comparing the instance of encoded content to the metric.

EP 4 668 734 A1

100

102

Server System

104

Content
(training)

106

Parameter search
optimization engine

110

Optimized
encoding
parameters

114

Model training
system

Trained
model

108

Feature extraction
engine

112

Features
dataset

**FIG. 1**

**FIG. 2**

—300

Search Optimization Method

Determine target bitrate, metric, and content —302

Build a surrogate model to model the objective function of optimizing encoding parameters —304

Use an acquisition function that uses the surrogate model to determine where to sample encoding parameters next —306

Encode the content using the encoding parameters —308

Update the surrogate model with new data based on the metric value of the encoding —312

Convergence threshold met? —314

No

Yes

Select optimal encoding parameters —316

Output optimal encoding parameters —318

**FIG. 3**

400

Training Method

Determine content for training — 402

Determine extracted feature values from the content — 404

Input the feature values for the content into a model to generate encoding parameters — 406

Train the model using the optimized encoding parameters — 408

# FIG. 4

~500

```
            ┌─────────────────────────┐
            │    Prediction Method     │
            └─────────────────────────┘
                         │
                         ▼
        ┌───────────────────────────────────┐  ~502
        │   Determine content for encoding   │
        └───────────────────────────────────┘
                         │
                         ▼
        ┌───────────────────────────────────┐  ~504
        │  Extract feature values from the content  │
        └───────────────────────────────────┘
                         │
                         ▼
        ┌───────────────────────────────────┐
        │ Input the feature values for the content into │  ~506
        │    the model to predict optimal encoding      │
        │              parameters                        │
        └───────────────────────────────────┘
                         │
                         ▼
        ┌───────────────────────────────────┐
        │  Use the optimal encoding parameters to  │  ~508
        │          encode the content              │
        └───────────────────────────────────┘
```

# FIG. 5

EP 4 668 734 A1

System 600

Processor 601

Memory 603

Storage
Device 605

Bus 615

Interface 611

# FIG. 6

**EUROPEAN SEARCH REPORT**

Application Number

EP 25 17 0176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZVEZDAKOV SERGEY ET AL: "Machine-Learning-Based Method for Content-Adaptive Video Encoding", 2021 PICTURE CODING SYMPOSIUM (PCS), IEEE, 29 June 2021 (2021-06-29), pages 1-5, XP033945078, DOI: 10.1109/PCS50896.2021.9477507 [retrieved on 2021-07-07] | 1,4-14 | INV.<br>H04N19/102<br>H04N19/154<br>H04N19/179<br>H04N19/192<br>H04N19/61<br>H04N19/149 |
| Y | * Sec. III, IV, V, Eq. 4 * | 2,3,15 | |
| Y | ZVEZDAKOV SERGEY ET AL: "Iterative Machine-Learning-Based Method of Selecting Encoder Parameters for Speed-Bitrate Tradeoff", 2022 DATA COMPRESSION CONFERENCE (DCC), IEEE, 22 March 2022 (2022-03-22), page 1, XP034143768, DOI: 10.1109/DCC52660.2022.00110 [retrieved on 2022-07-04] * table 1 * | 2,3,15 | |
| A | KNOWLES J.: "ParEGO: a hybrid algorithm with on-line landscape approximation for expensive multiobjective optimization problems", IEEE TRANSACTIONS ON EVOLUTIONARY COMPUTATION, vol. 10, no. 1, 1 February 2006 (2006-02-01), pages 50-66, XP093318196, US ISSN: 1089-778X, DOI: 10.1109/TEVC.2005.851274 * Sec. III * | 2,3,15 | TECHNICAL FIELDS SEARCHED (IPC)<br><br>H04N |

-/--

The present search report has been drawn up for all claims

| Place of search | Date of completion of the search | Examiner |
|---|---|---|
| The Hague | 25 September 2025 | Satti, Shahid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

EP 25 17 0176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUI ZHONG ET AL: "Accelerating the Evolutionary Algorithms by Gaussian Process Regression with epsilon-greedy acquisition function", ARXIV.ORG, CORNELL UNIVERSITY LIBRARY, 201 OLIN LIBRARY CORNELL UNIVERSITY ITHACA, NY 14853, 13 October 2022 (2022-10-13), XP091342932, * Algorithm 1; page 3, lines 8, 9 * ----- | 2,3,15 | |
| A | AL-BARWANI MARYAM ET AL: "A machine learning based framework for parameter based multi-objective optimisation of a H.265 video CODEC", 2016 FUTURE TECHNOLOGIES CONFERENCE (FTC), IEEE, 6 December 2016 (2016-12-06), pages 553-559, XP033044513, DOI: 10.1109/FTC.2016.7821661 [retrieved on 2017-01-17] * the whole document * ----- | 1-15 | |

TECHNICAL FIELDS
SEARCHED (IPC)

The present search report has been drawn up for all claims

| Place of search | Date of completion of the search | Examiner |
|---|---|---|
| The Hague | 25 September 2025 | Satti, Shahid |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63660819